# EUROPEAN PATENT SPECIFICATION

(11) **EP 0 308 905 B1**
(45) Date of publication and mention of the grant of the patent: **19.04.1995**
(21) Application number: 88115506.3
(22) Date of filing: 21.09.1988
(51) Int. Cl.: C08G 65/32, C08G 65/00

(54) **Perfluoropolyethers having mono and bishypofluorite end groups and process for preparing them**
Perfluoropolyether mit Mono- und Bishypofluoritendgruppen und Verfahren zu ihrer Herstellung
Perfluoropolyéthers ayant des groupes terminaux mono- et bishypofluorites et procédé de leur préparation

(30) Priority: 22.09.1987 IT 2197987
(43) Date of publication of application: 29.03.1989
(73) Proprietor: AUSIMONT S.p.A., I-20121 Milano (IT)
(72) Inventor: Marchioni, Giuseppe, I-20133 Milano (IT); Staccione, Anna, I-20100 Milano (IT)
(74) Representative: Barz, Peter, Dr.

(56) References cited:
- EP-A- 0 158 446
- EP-A- 0 193 028
- EP-A- 0 223 238
- GB-A- 1 104 482

## Description

The invention relates to the field of perfluoropolyethers. More particularly, the invention relates to mono or difunctional perfluoropolyethers having hypofluorite end groups.

The invention furthermore relates to a process for preparing monohypofluorite or bishypofluorite perfluoropolyethers by reaction of perfluoroether compounds containing one or two fluoroformate end groups with fluorine in the presence of UV radiation.

In another respect, the invention relates to a process for preparing perfluoropolyethers having fluoroformate end groups utilized as precursors for the obtainment of the perfluoropolyethers having hypofluorite end groups.

Still in another respect, the invention relates to a process for preparing monohypofluorite and bishypofluorite perfluoropolyethers by treatment of perfluoropolyether precursors prevailingly containing a peroxy group -OCF₂OOCF₂O- with fluorine in the presence of UV radiation.

The hypofluorites, i.e., compounds containing the fluoroxy group -OF are known and are considered difficult to be prepared owing to their instability.

The first member of the perfluoroalkyl series, i.e., trifluoromethylhypofluorite, exhibits a higher thermal stability compared with all the higher homologues since its preparation requires such drastic and limiting conditions that no industrial application is practically possible.

US Patent 3 442 927 describes a process for preparing fluoroxy compounds by direct reaction, in a discontinuous manner, of fluorine with perfluoroalkyl compounds containing oxygen of the carbonyl or carboxylic type, at temperatures ranging from -200°C to 50°C. The products are isolated from the reaction mixture by fractionated condensation using glycerine-cooled separators.

A separation of this type is one of the most apparent drawbacks of the process. Furthermore, the products are hypofluorites characterized by a non-perfluoropolyether perfluoroalkyl chain and they have, in the β position with respect to group -OF, a carbon atom.

Data on hypofluorites with oxygen atoms in the β position with respect to group -OF are very few in literature. No mention is made of hyopfluorites having the structure ROCF₂OF (in this case R indicates any organic radical).

Among the compounds having a similar structure that are known CF₃OOCF₂OF and CF₃CF(CF₃)OOCF₂OF are described in US patent 3 442 927, which has already been cited.

It has, surprisingly, been found that it is possible to prepare thermally stable mono or bishypofluorite compounds having a perfluorooxyalkylene structure and an oxygen atom in the β position with respect to group -OF by means of a process which comprises reacting a perfluoropolyether containing fluoroformate end groups or containing one or more peroxy groups of the type -OCF₂OOCF₂O- in the polyether chain with fluorine in the liquid phase, preferably in the presence of an inert fluorinated solvent, at a temperature ranging from -60°C to +30°C, preferably from -40°C to +20°C, in the presence of UV radiation.

Thus, an object of the present invention are perfluoropolyethers having a hypofluorite end group of the general formula:

R_{f} O CF₂OF

wherein R_{f} is a perfluoropolyether group selected from the following classes:
I ) 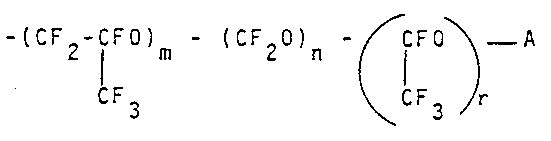
II ) -(CF₂CF₂O)ₜ - (CF₂O)ₚ ―A
III) 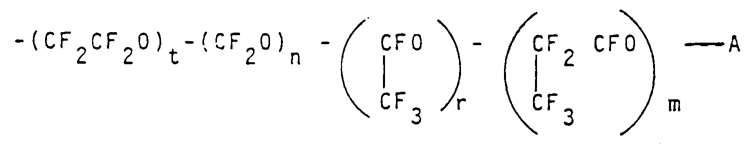
wherein A is -CF₃, -C₂F₅, C₃F₇ or CF(CF₃)₂, m, r are integers higher than zero and lower than 50; n is an integer higher than or equal to zero and lower than 50; t, p are integers higher than zero and lower than 200; the above-indicated perfluoroalkylene units with indexes m, n, r, t and p being statistically distributed along the perfluoropolyether chain.

Another object of the present invention are perfluoropolyethers having two hypofluorite end groups of general formula :

FOCF₂OR'_{f} CF₂OF

wherein R'_{f} is a perfluorooxyalkylene group selected from the following classes :
I ) 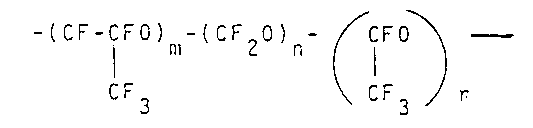
II ) -(CF₂CF₂O)ₜ-(CF₂O)ₚ-
III ) 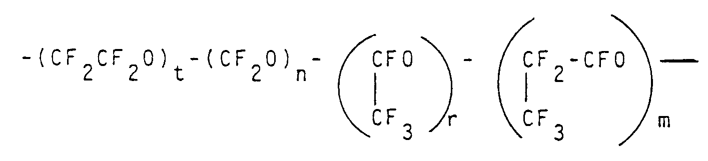 where m, r are integers higher than zero and lower than 50; n is an integer higher than or equal to zero and lower than 50; t, p are integers higher than zero and lower than 200; the perfluorooxyalkylene units with indexes m, n, r, t and p indicated hereinabove being statistically distributed along the perfluoropolyether chain.

Particularly significant perfluoropolyethers with one or two hypofluorite end groups represented by the above-indicated general formulas are for example :

FOCF₂O(CF₂CF₂O)ₜ(CF₂O)ₚCF₂OF 1)

and

CF₃O(CF₂CF₂O)ₜ(CF₂O)ₚ-CF₂OF 2)

The mono- and bis-hypofluorite of the present invention are utilized for preparing fluorinated vinylethers.

In fact, as is known, the hypofluorites are capable of reacting with fluorinated olefins which, by subsequent reactions, can be converted into other functional groups such as, for example, fluorinated vinylethers.

The fluorinated mono and bisvinylethers thus obtained can be utilized as monomers and comonomers in the preparation of polymeric substances (see, for instance, US patent 3 450 684).

The bishypofluorites are utilizable in the preparation of the corresponding bisvinylethers. The preparation of the adducts with fluorinated olefins as precursors for vinylethers can be effected directly on the reaction mixture containing the inert reaction solvent, since the conversion of the starting product is generally complete and the hypofluorite yield is very high.

Another object of the present invention is a process for preparing perfluoropolyethers having fluoroformate end groups starting from a product obtained from the photochemical oxidation of C₂F₄ and/or of C₃F₆ containing peroxy groups, provided that said product of the photochemical oxidation of C₂F₄ and/or C₃F₆ does not contain any unreacted C₂F₄ and/or C₃F₆ which process comprises treating said photochemical oxidation product by means of UV radiation having a wave-length ranging from 200 to 500 nm in an oxygen stream at a temperature of from -40°C to 0°C.

The photochemical oxidation of C₂F₄ and/or of C₃F₆ is well known and broadly described in literature, for example in British patents Nos. 1,104,482; 1,153,306; 1,189,339; 1,217,871 and in US patent No. 3,242,218, and it leads to perfluoropolyether products containing peroxy groups.

The process of the present invention leads to the formation of perfluoropolyether products containing perfluoroformate end groups, which can be converted, by means of a further treatment, to hypofluorite end groups.

The perfluoropolyethers having fluoroformate end groups can be obtained, in the photosynthesis step, at low concentrations and by heat-treatment at a temperature higher than 150°C they are converted to acylic or ketonic fluoride according to the reactions : 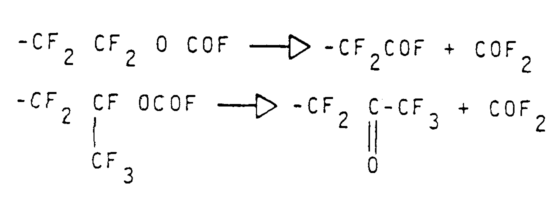
It has surprisingly been found that, when the synthesized peroxy product is irradiated with UV radiations under an oxygen flow at a temperature ranging from -40°C to 0°C, preferably from -30°C to -20°C, it is possible to obtain perfluoropolyethers having fluoroformate end groups at a high concentration (higher than 80%). In order to have a high concentration of this end group it is advisable that the reaction should proceed for rather long times, of the order of 200 hours. The starting peroxy raw product utilized in the process for preparing perfluoropolyethers having fluoroformate end groups is preferably diluted in an inert solvent such as, for example, linear or cyclic perfluorinated ethers or hydrocarbons.

The perfluoropolyethers having fluoroformate end groups obtainable by the process of the present invention, in spite of a decrease in the peroxy content of the precursor raw product, still have peroxy groups distributed along the perfluoropolyether chain; such residual groups can be almost completely removed after stripping of the solvent, by UV irradiation at a temperature of about 40°C.

The perfluoropolyethers having fluoroformate end groups according the process of the present invention are utilized as precursors for the preparation of the above-mentioned mono and bishypofluorite perfluoropolyethers by reaction, in the liquid phase, with fluorine at a temperature ranging from -60°C to +30°C, preferably from -40°C to 20°C in the presence of UV radiation having a wave-length ranging from 200 to 500 nm, preferably from 300 to 500 nm.

In order to be able to have better control over the reaction it is advisable to utilize a perfluorinated solvent such as perfluorocarbons or perfluoropolyethers (such as GALDEN ® D80 or GALDEN ® FC75) and to dilute the fluorine flow with an inert gas such as nitrogen.

As is well-known, the maximum yield of perfluoropolyether having a hypofluorite end group is obtainable, after having adjusted the temperature, in relation to the reaction times and to the wave-lengths utilized.

Those skilled in the art can easily determine the proper conditions on the basis of the teaching contained in the present application.

Operating for much longer times than the ones corresponding to the maximum yield leads, as the applicant has found, to a decrease in hypofluorite. For example, at -40°C and using an UV wave-length ranging from 200 to 500 nm, it is preferable to operate for times not exceeding 200 hours. Conversely, when the operation is carried out at -40°C but using radiation having a narrower λ (300-500 nm), it is preferable to use reaction times not exceeding 60 hours.

High temperatures hinder the reaction to hypofluorite.

The use of a UV wave-length from 300 to 500 nm is preferable since, although it causes a decrease in the reaction rate to hypofluorite, due to a lesser concentration of the F radical, it drastically reduces the dissociation of the hypofluorite end group and leads to practically complete conversions with a very high hypofluorite yield, i.e., higher than 80%.

Another process for preparing mono and bishypofluorite perfluoropolyethers - which represents a further aspect of the present invention- comprises reacting perfluoropolyethers containing almost only the peroxy group -OCF₂OOCF₂O- with fluorine in the liquid phase, at a temperature ranging from -60°C to 40°C in the presence of UV radiation of a wave-length ranging from 200 to 500 nm.

Perfluoropolyethers with a high content of peroxide of the type -OCF₂OOCF₂O- are obtained by irradiating, at a wave-length from 200 to 500 nm in an O₂ flow at temperatures ranging from -70°C to -40°C, synthesis peroxy products such as, for example, the ones described in the above-mentioned patents provided that said product of the photochemical oxidation of C₂F₄ and/or C₃F₆ does not contain any unreacted C₂F₄ and/or C₃F₆

With the process described above, it is possible to obtain perfluoropolyethers containing the peroxy group -OCF₂OOCF₂O-, where this group represents more than 95% of the total peroxy content.

For preparing hypofluorites of high purity, it is preferable to use, as a starting product, a perfluoropolyether containing fluoroformate groups since the conversion of these end groups is total.

In this manner it is possible to obtain a higher hypofluorite/peroxy group (CF₂OF/OO) ratio than the one obtainable starting from a peroxy product. At any rate, the peroxy precursor is to be preferred when the presence of peroxy does not influence the utilization of the product, for example, as a fluorinating agent, and when its selective removal is carried out after the conversion of the hypofluorite end group to a proper functional group.

If hypofluorite perfluoropolyethers are to be prepared from fluoroformate precursors, it is preferable to utilize, as starting products, perfluoropolyethers having a high content of peroxy groups -OCF₂OOCF₂O- in order to obtain high yields of bishypofluorites.

The following examples serve to illustrate the invention.

### Example 1

A 35% by weight solution, in perfluorohexane, of a PFPE from TFE having a viscosity of 960 cSt at 20°C and a perxy power equal to 1.5 g of active oxygen/100 g, was introduced into a photochemical reactor having a 1-liter capacity, equipped with a quartz sheath for housing a Hg vapour lamp, type Hanau TQ 150, equipped with a bubbler and with a system for the thermoregulation of both the reactor and the sheath system. The reactor was conditioned at a temperature of -30°C and the product was irradiated under a continuous oxygen flow for a total time of 200 hours. At the end, the discharged product exhibited a viscosity of 28 cSt at 20°C and a residual peroxy power of 0.8; the removal of the residual peroxide was obtained, after stripping of the solvent, by irradiation at a temperature of 40°C. The final product had a viscosity of 17 cSt at 20°C and an average molecular weight, determined by NMR ¹⁹F, of 2300 and contained 83% of end groups-OCOF, 10% of end groups-OCF₃ and 7% of end groups-OCF₂Cl, wherefrom it results that about 70% of the molecules was difunctional with respect to -OCOF.

### Example 2

Into a photochemical reactor having a 1-liter volume, cooled to -42°C there were charged 700 g of a peroxy raw product obtained from TFE having η₂₀ = 9760 cSt and an oxidizing power (O.P.) = 1.5 g of active oxygen/100 g of product and 1300 g of CCl₂F₂.
The above mixture, maintained at a temperature of -40°C, was irradiated by an U V lamp type Hanau TQ 150, in an oxygen flow of 150 l/h.
Samplings and NMR analyses carried out at regular intervals permitted to follow the decrease of the -OCF₂CF₂OO-structure and the simultaneous increase of the -OCF₂OO-structure. After a 108-hour irradiation, structure-OCF₂CF₂OO-had practically disappeared.
After evaporation of the solvent, from the reactor were discharged 630 g of a product having η₂₀ = 624 cSt containing peroxy structure only of type -OCF₂ OO CF₂O-, the oxidizing power being equal to 1.0 g of active O₂/100 g of oil.

### Example 3

A solution at 10% by weight of the product prepared as is described in example 1, in perfluoroheptane, was charged into a photochemical reactor having a maximum volume of 180 ml and an optical path of 6.5 mm, equipped with quartz sheaths for housing a mercury vapour lamp, type Hanau TQ 150, and furthermore equipped with a bubbler, a magnetic stirrer, a CO₂ trap and a thermoregulation system for both the reactor and the sheath system.
After thermoregulation of the reaction system at -40°C and lighting of the lamp, a fluorine flow of 5 Nl/h was conveyed into the reactor.
The reaction trend was followed by drawing little amounts of solution and by NMR ¹⁹F analysis of the product, after having removed the solvent.
After a 12-hour reaction, the product revealed to contain 0.14 mmols/g oil of end groups of type -OCOF, 0.57 mmols/g oil of hypofluorite end groups -OCF₂OF, 0.07 mmols/g oil of trifluoromethyl end gorups -OCF₃ and 0.10 mmols/g oil of peroxy groups of type OCF₂OO-, the conversion to hypofluorite being therefore equal to 71.25%.

After a further 10.5 hour reaction, the product was quantitatively discharged and it resulted to be free from fluoroformate end groups-OCOF and to contain 0.59 mmols/g oil of hypofluorite end group -OCF₂OF, 0.09 mmols/g oil of end groups -OCF₃ and 0.18 mmols/g oil of peroxy groups -CF₂OO-. Thus, the conversion to hypofluorite was 74%.

The product had a molecular weight of 2950 and a functionality of 1.65.

The results are summarized in Table 1.

**TABLE 1**

| time (h) | end group -OCOF mmols/g oil | end group -OCF₂OF | end group -OCF₃ | group -OCF₂OO- | end groups -OOCF₃ |
|---|---|---|---|---|---|
| 0 | 0,8 | -- | -- | -- | - |
| 5 | 0,45 | 0,32 | 0,04 | 0,05 | t |
| 12 | 0,14 | 0,57 | 0,07 | 0,10 | t |
| 18,5 | 0,04 | 0,59 | 0,09 | 0,14 | t |
| 22,5 | t | 0,59 | 0,09 | 0,18 | t |
| temperature = -40°C; t = traces. | | | | | |

### Example 4

In a photochemical reactor like that described in example 3, but equipped with a Pyrex sheath for housing the lamp, in order to utilize only radiation from 300 to 400 nm, a test was carried out under the same reaction conditions and following the same operative modalities. After a 20-hour reaction, the product proved to contain 0.24 mmols/g oil of end groups -OCOF, 0.46 mmols/g oil of hypofluorite end groups -OCF₂OF, 0.10 mmols/g oil of trifluoromethyl end groups -OCF₃ and 0.07 mmols/g oil of peroxy groups -OCF₂OO-.
After having carried on the reaction for further 38 hours, the reaction product was quantitatively discharged and, subjected to analysis, revealed to contain still 0.07 mmols/g oil of fluoroformate end groups -OCOF, 0.66 mmols/g oil of hypofluorite end groups -OCF₂OF, 0.10 mmols/g oil of trifluoromethyl end groups and 0.06 mmols/g oil of peroxy groups -OCF₂OO-; the conversion to hypofluorite was threfore equal to 82.5%. The product had a molecular weight of 2560 and a functionality of 1.66.
The results are summarized in Table 2.

**TABLE 2**

| time (h) | end group -OCOF mmols/g oil | end group -OCF₂OF | end group -OCF₃ | group -OCF₂OO- | end groups -OOCF₃ |
|---|---|---|---|---|---|
| 0 | 0,8 | -- | -- | -- | - |
| 6 | 0,35 | 0,19 | 0,07 | 0,05 | - |
| 20 | 0,24 | 0,48 | 0,1 | 0,07 | - |
| 36 | 0,12 | 0,61 | 0,1 | 0,08 | - |
| 58 | 0,07 | 0,62 | 0,1 | 0,08 | - |
| temperature = -40°C. | | | | | |

### Example 5

In a photochemical reactor like the one described in example 3, a test was carried out according to the same operative modalities, but at a temperature of -20°C. After a 14.5-hour reaction, the product resulted to contain 0.04 mmols/g oil of fluoroformate end groups -OCOF, 0.52 mmols/g oil of hypofluorite end groups -OCF₂OF, 0.12 mmols/g oil of trifluoromethyl end groups -OCF₃ and 0.13 mmols/g oil of peroxy groups -OCF₂OO-.
After a 20.5-hour reaction, the test was stopped and the product was quantitatively recovered.
Subjected to analysis, it revealed the disappearance of the fluoroformate end groups and the presence of 0.52 mmols/g oil of hypofluorite end groups -OCF₂OF, 0.15 mmols/g oil of trifluoromethyl end groups -OCF₃ and 0.16 mmols/g oil of peroxy groups-OCF₂OO-. The product had a molecular weight of 2860 and a functionality of 1.47.

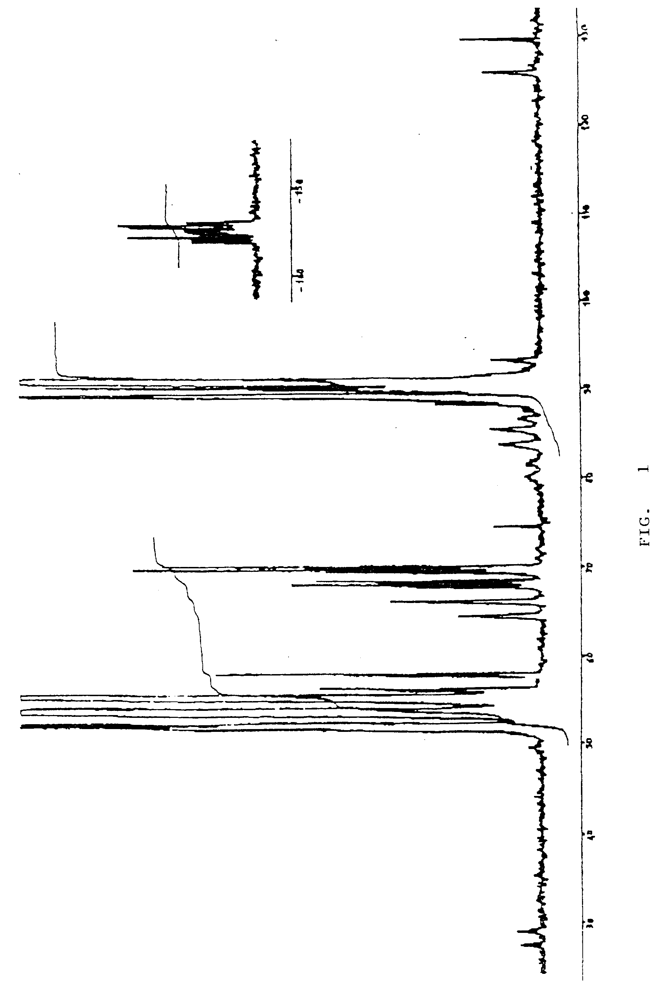

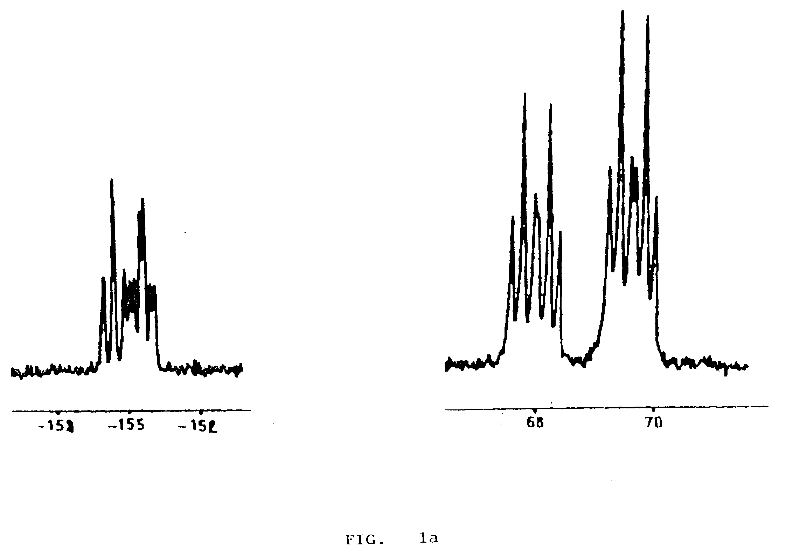

The ¹⁹F NMR pattern (60 MHz) of the product is shown in figures 1 and 1a. There are evident two types of -OF end groups, characterized by the following parameters :

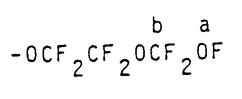

δₐ = -155.7 δ_{b} = 68.0 J_{ab} = 26.8 Hz 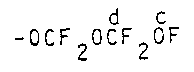
δ_{c} = -154.5 δ_{d} = 69.6 J_{cd} = 25.2 Hz
The results are reported in Table 3.

**TABLE 3**

| time (h) | end group -OCOF mmols/g oil | end group -OCF₂OF | end group -OCF₃ | group -OCF₂OO- | end groups -OOCF₃ |
|---|---|---|---|---|---|
| 0 | 0,8 | -- | -- | -- | - |
| 7,5 | 0,21 | 0,43 | 0,1 | 0,11 | t |
| 14,5 | 0,04 | 0,52 | 0,12 | 0,13 | t |
| 20,5 | 0,00 | 0,52 | 0,15 | 0,16 | t |
| temperature = -20°C; t = traces. | | | | | |

### Example 6

In a photochemical reactor like the one described in example 3, a test was carried out according to the same operative modalities, but at a temperature of +10°C. After a 5-hour reaction, the reaction product was quantitatively recovered and, subjected to analysis, it revealed to contain no longer fluoroformate end groups -OCOF, while there were present 0.27 mmols/g

oil of ----- hypofluorite end groups -OCF₂OF, 0.44 mmols/g oil of trifluoromethyl end groups -OCF₃, 0.03 mmols/g oil of ------ end groups of type -OOCF₃ and 0.12 mmols/g oil of peroxy end groups -OCF₂OO-. The product exhibited a molecular weight of 2550 and a functionality of 0.7.

The results are summarized in Table 4.

**TABLE 4**

| time (h) | end group O-COF mmols/g oil | end group -OCF₂OF | end group -OCF₃ | group -OCF₂OO- | end groups -OOCF₃ |
|---|---|---|---|---|---|
| 0 | 0,8 | -- | -- | -- | -- |
| 3 | 0,16 | 0,32 | 0,28 | 0,1 | 0,02 |
| 5 | 0 | 0,27 | 0,44 | 0,12 | 0,03 |
| temperature = +10°C. | | | | | |

### Example 7

Into a photochemical reactor, as is described in example 3, a 10% solution, in perfluorohexane, of a PFPE obtained from TFE, having a molecular weight of 13,000, containing peroxy groups of type -OCF₂OOCF₂O- (1.2 mmols/g of oil), fluoroformate end gorups -OCOF (0.03 mmols/g of oil) and trifluoromethyl end groups -OCF₃ (0.03 mmols/g of oil), was charged. The reaction was conducted according to the same modalities and under the same operative conditions as in example 3. After a 10-hour reaction, an analysis of the product revealed the disappearance of fluoroformate end groups -OCOF, a content of hypofluorite end groups -OCF₂OF of 0.27 mmols/g of oil, 0.09 mmols/g oil of trifluoromethyl end groups -OCF₃ and 0.97 mmols/g oil of peroxy groups -OCF₂OO- having a molecular weight of 5140. The reaction was carried on for further 45 hours. The discharged product contained 0.56 mmols/g oil of hypofluorite end groups, 0.11 mmols/g oil of trifluoromethyl end groups and 0.54 mmols/g oil of peroxy groups -OCF₂OO- having a molecular weight of 2830 and a functionality of 1.7.

### Example 8

A portion of the sample obtained in example 5 was additioned with H₂O and was kept at room temperature for 37 days. After such time the sample proved to be stable to analysis; NMR analysis and a iodometric titration provided a O.P. value respectively of 0.96 and 0.91 g of active oxygen/100 g of product, equal to the starting value.
The same sample, after heating to 90°C for 7 hours, was still stable to analysis.

### Example 9

A portion of the sample obtained in example 5 was dissolved in n-perfluoroheptane and introduced into a flask equipped with a bubbler, from which SO₂ was fed at a temperature of 20°C. No reaction was revealed by the NMR analysis. The treatment was repeated at a temperature of 80°C.
At the end fo the test the hypofluorite end groups -OCF₂OF resulted to be converted to end groups -OSO₂F (¹⁹F NMR: δ = -48.3; IR: η = 1495 cm⁻¹).

### Example 10

Portions of the product obtained according to example 5 were introduced into glass vials and heated under the conditions indicated in Table 5.

**TABLE 5**

| Sample | Temperature °C | Time (h) |
|---|---|---|
| 1 | 170 | 1 |
| 2 | 170 | 2 |
| 3 | 180 | 1 |
| 4 | 180 | 2 |

Samples 1, 2 and 3 exhibited a 20% reduction in the hypofluorite content, while in sample 4 hypofluorite was no longer present.

### Example 11

A portion of the product obtained in example 4 was dissolved in n-perfluorohexane and introduced into a reactor equipped with a magnetic stirrer, a bubbler and a thermoregulation system.
Tests were conducted at a temperature of -60°C with various olefins (utilized in excess with respect to hypofluorite 2:1), after addition of the monomer, the reaction mixture was maintained at room temperature for about 1 hour. The summation products were obtained with yields of 80-100% in all cases. The structures of the obtained adducts and the relevant yields of the two isomers revealed by NMR ¹⁹F analysis are reported in Table 6.

**TABLE 6**

| olefin | adduct | % |
|---|---|---|
| C₃F₆ | -OCF₂CF₂CF₃ | 65 |
| | -OCF(CF₃)₂ | 35 |
| C₂F₄ | -OCF₂CF₃ | -- |
| C₂F₃Cl | -OCF₂CF₂Cl | 77 |
| | -OCFClCF₃ | 23 |
| CFClCFCl | -OCFClCF₂Cl | -- |
| CH₂CF₂ | -OCH₂CF₃ | 64 |
| | -OCF₂CH₂F | 36 |
| C₂F₃OCF₂CF₂Br | -OCF₂CF₂OC₂F₄Br | 75 |
| | -OCF(CF₃)OC₂F₄Br | 25 |
| CF₂CF-CFCF₂ | -OCF₂-CF=CF-CF₃ | -- |

## Claims

1. Perfluoropolyethers having a hypofluorite end group of general formula :
R_{f} O CF₂OF
where R_{f} is a perfluoropolyether group selected from the following classes :
I ) 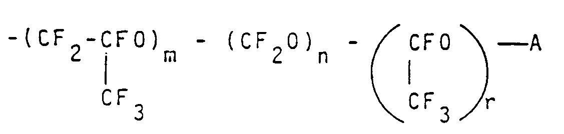
II ) -(CF₂CF₂O)ₜ - (CF₂O)ₚ ―A
III) 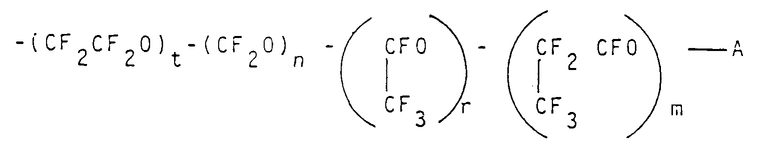
in which A is -CF₃, -C₂F₅, C₃F₇ or CF(CF₃)₂, m, r are integers higher than zero and lower than 50, n is an integer from 0 to 50, t, p are integers higher than zero and lower than 200; the perfluoroalkylene units indicated above with indexes m, n, r, t and p being statistically distributed along the perfluoropolyether chain.

2. Perfluoropolyethers having two hypofluorite end groups of general formula :
FOCF₂O R'_{f} CF₂OF
wherein R'_{f} is a perfluoro-oxyalkylene group selected from the following classes :
I ) 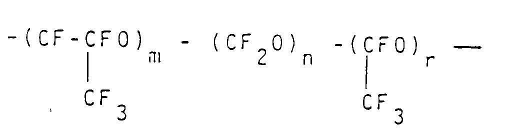
II ) -(CF₂CF₂O)ₜ-(CF₂O)ₚ-
III) 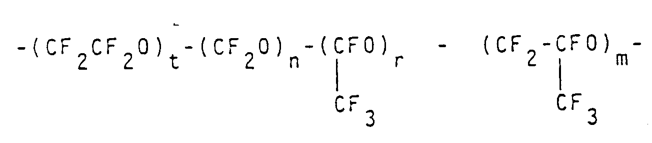
in which m, r are integers higher than zero and lower than 50; n is an integer higher than or equal to zero and lower than 50; t, p are integers higher than zero and lower than 200; the perfluorooxyalkylene units with indexes m, n, r, t and p indicated above being statistically distributed along the perfluoropolyether chain.

3. A process for preparing perfluoropolyethers having fluoroformate end groups starting from a product of the photochemical oxidation of C₂F₄ and/or of C₃F₆ containing peroxy groups provided that said product of the photochemical oxidation of C₂F₄ and/or of C₃F₆ does not contain any unreacted C₂F₄ and/or C₃F₆, which process comprises treating said photochemical oxidation product by means of UV radiation of a wave-length ranging from 200 to 500 nm in an oxygen stream at a temperature ranging from -40°C to 0°C.

4. A process for preparing perfluoropolyethers having one or two hypofluorite end groups starting from the product of the photochemical oxidation of C₂F₄ and/or of C₃F₆ containing peroxy groups, which process comprises the following steps:
a) treating said photochemical oxidation product with UV radiation of a wave-length ranging from 200 to 500 nm in an oxygen stream at a temperature ranging from -40°C to 0°C;
b) reacting the product obtained in step a) in the liquid phase with fluorine at a temperature ranging from -60°C to +30°C in the presence of UV radiation of a wave-length ranging from 200 to 500 nm.

5. The process of claim 4, wherein the wave-length in step b) ranges from 300 to 500 nm.

6. The process of claim 3 or 4, wherein the peroxy group of the product obtained from the photochemical oxidation of C₂F₄ and of C₃F₆ is substantially -OCF₂OOCF₂O-.

7. A process for preparing peroxidized perfluoropolyethers substantially having, as a peroxy group, group -OCF₂OOCF₂O-, which process comprises treating the product of the photochemical oxidation of C₂F₄ and/or of C₃F₆ in an oxygen stream at a temperature ranging from -70 °C to -40°C by means of UV radiation of a wave-length from 200 to 500 nm provided that said product of the photochemical oxidation of C₂F₄ and/or of C₃F₆ does not contain any unreacted C₂F₄ and/or C₃F₆.

8. A process for preparing mono- or bis-hypofluorites, which comprises reacting a perfluoropolyether containing peroxy group -OCF₂O OCF₂O- with fluorine in the liquid phase, at a temperature ranging from -60°C to +30°C in the presence of UV radiation of a wave-length ranging from 200 to 500 nm.

9. Perfluoropolyethers having hypofluorite end groups, of formula :
FOCF₂(OCF₂CF₂)ₜ(OCF₂)ₚOCF₂OF
and
CF₃(OCF₂CF₂)ₜ(OCF₂)ₚOCF₂OF,
wherein t and p are as defined above.

## Patentansprüche

1. Perfluorpolyether mit Hypofluorit-Endgruppe der allgemeinen Formel:
R_{**f**}OCF**₂**OF
worin R_{**f**} eine aus den folgenden Klassen ausgewählte Perfluorpolyether-Gruppe ist:
I) 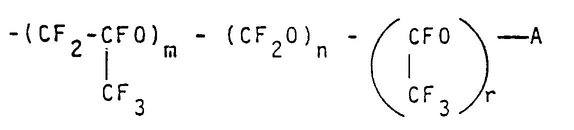
II) -(CF₂CF₂O)ₜ - (CF₂O)ₚ ―A
III) 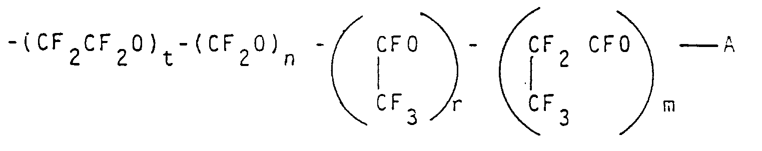
worin A für -CF**₃**, -C**₂**F**₅**, C**₃**F**₇** oder CF(CF**₃**)**₂** steht, m, r ganze Zahlen sind, die größer als null und kleiner als 50 sind, n eine ganze Zahl von 0 bis 50 ist, t, p ganze Zahlen sind, die größer als null und kleiner als 200 sind; wobei die oben angegebenen Perfluoralkylen-Einheiten mit den Indices m, n, r, t und p statistisch entlang der Perfluorpolyetherkette verteilt sind.

2. Perfluorpolyether mit zwei Hypofluorit-Endgruppen der allgemeinen Formel:
FOCF**₂**OR'_{**f**}CF**₂**OF
worin R'_{**f**} eine aus den folgenden Klassen ausgewählte Perfluoroxyalkylen-Gruppe ist:
I) 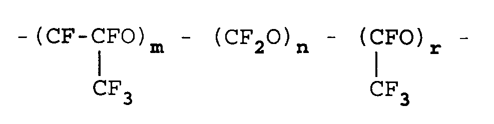
II) -(CF**₂**CF**₂**O)_{**t**} - (CF**₂**O)_{**p**} -
III) 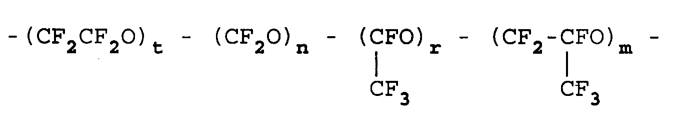
worin m, r ganze Zahlen sind, die größer als null und kleiner als 50 sind; n eine ganze Zahl ist, die größer oder gleich null und kleiner als 50 ist; t, p ganze Zahlen sind, die größer als null und kleiner als 200 sind; wobei die oben angegebenen Perfluoroxyalkylen-Einheiten mit den Indices m, n, r, t und p statistisch entlang der Perfluorpolyetherkette verteilt sind.

3. Verfahren zur Herstellung von Perfluorpolyethern mit Fluorformiat-Endgruppen, ausgehend von einem Peroxygruppen enthaltenden Produkt der photochemischen Oxidation von C**₂**F**₄** und/oder von C**₃**F**₆**, mit der Maßgabe, daß das Produkt der photochemischen Oxidation von C**₂**F**₄** und/oder von C**₃**F**₆** kein nicht umgesetztes C**₂**F**₄** und/oder C**₃**F**₆** enthält, wobei das Verfahren umfaßt die Behandlung des photochemischen Oxidationsproduktes mit Hilfe von UV-Strahlung einer Wellenlänge im Bereich von 200 bis 500 nm in einem Sauerstoffstrom bei einer Temperatur im Bereich von -40°C bis 0°C.

4. Verfahren zur Herstellung von Perfluorpolyethern mit einer oder zwei Hypofluorit-Endgruppen, ausgehend von dem Peroxygruppen enthaltenden Produkt der photochemischen Oxidation von C**₂**F**₄** und/oder von C**₃**F**₆**, wobei das Verfahren die folgenden Stufen umfaßt:
a) Behandlung des photochemischen Oxidationsproduktes mit UV-Strahlung einer Wellenlänge im Bereich von 200 bis 500 nm in einem Sauerstoffstrom bei einer Temperatur im Bereich von -40°C bis 0°C;
b) Umsetzung des in Stufe a) erhaltenen Produktes in der flüssigen Phase mit Fluor bei einer Temperatur im Bereich von -60°C bis +30°C in Anwesenheit von UV-Strahlung einer Wellenlänge im Bereich von 200 bis 500 nm.

5. Verfahren nach Anspruch 4, in welchem die Wellenlänge in Stufe b) im Bereich von 300 bis 500 nm liegt.

6. Verfahren nach Anspruch 3 oder 4, in welchem die Peroxygruppe des aus der photochemischen Oxidation von C**₂**F**₄** und von C**₃**F**₆** erhaltenen Produktes im wesentlichen -OCF**₂**OOCF**₂**O- ist.

7. Verfahren zur Herstellung peroxidierter Perfluorpolyether, die als Peroxygruppe im wesentlichen die Gruppe -OCF**₂**OOCF**₂**O- aufweisen, wobei das Verfahren die Behandlung des Produktes der photochemischen Oxidation von C**₂**F**₄** und/oder von C**₃**F**₆** in einem Sauerstoffstrom bei einer Temperatur im Bereich von -70°C bis -40°C mit Hilfe von UV-Strahlung einer Wellenlänge von 200 bis 500 nm umfaßt, mit der Maßgabe, daß das Produkt der photochemischen Oxidation von C**₂**F**₄** und/oder von C**₃**F**₆** kein nicht umgesetztes C**₂**F**₄** und/oder C**₃**F**₆** enthält.

8. Verfahren zur Herstellung von Mono- oder Bishypofluoriten, welches umfaßt die Umsetzung eines die Peroxygruppe -OCF**₂**OOCF**₂**O- enthaltenden Perfluorpolyethers mit Fluor in der flüssigen Phase bei einer Temperatur im Bereich von -60°C bis +30°C in Anwesenheit von UV-Strahlung einer Wellenlänge im Bereich von 200 bis 500 nm.

9. Perfluorpolyether mit Hypofluorit-Endgruppen der Formel:
FOCF**₂**(OCF**₂**CF**₂**)_{**t**}(OCF**₂**)_{**p**}OCF**₂**OF
und
CF**₃**(OCF**₂**CF**₂**)_{**t**}(OCF**₂**)_{**p**}OCF**₂**OF,
worin t und p wie oben definiert sind.

## Revendications

1. Perfluoropolyéthers ayant un groupe terminal hypofluorite, représentés par la formule générale :
R_{f} O CF₂OF
où R_{f} représente un groupe perfluoropolyéther choisi parmi les classes suivantes :
(I) 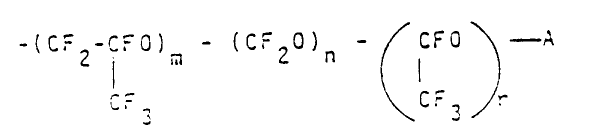
(II) -(CF₂CF₂O)ₜ - (CF₂O)ₚ ―A
(III) 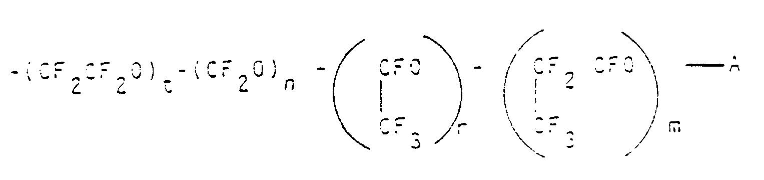
dans lesquelles :
- A représente -CF₃, -C₂F₅, C₃F₇ ou CF(CF₃)₂ ;
- m, r représentent des entiers supérieurs à zéro et inférieurs à 50 ;
- n représente un entier de 0 à 50 ;
- t, p représentent des entiers supérieurs à zéro et inférieurs à 200 ;
les unités perfluoroalkylène indiquées ci-dessus avec les indices m, n, r, t et p étant distribuées de façon statistique le long de la chaîne perfluoropolyéther.

2. Perfluoropolyéthers ayant deux groupes terminaux hypofluorite, représentés par la formule générale :
FOCF₂O R'_{f} CF₂OF
dans laquelle R'_{f} représente un groupe perfluoro-oxyalkylène choisi parmi les classes suivantes :
(I) 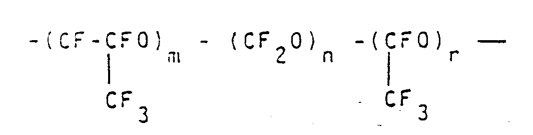
(II) -(CF₂CF₂O)ₜ-(CF₂O)ₚ-
(III) 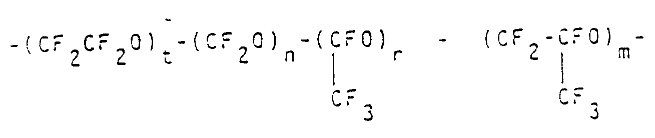
dans lesquelles :
- m, r représentent des entiers supérieurs à zéro et inférieurs à 50 ;
- n représente un entier supérieur ou égal à zéro et inférieur à 50 ;
- t, p représentent des entiers supérieurs à zéro et inférieurs à 200 ;
les unités perfluorooxyalkylène avec les indices m, n, r, t et p indiqués ci-dessus étant distribuées de façon statistique le long de la chaîne perfluoropolyéther.

3. Procédé de préparation de perfluoropolyéthers ayant des groupes terminaux fluoroformiate, à partir d'un produit de l'oxydation photochimique de C₂F₄ et/ou de C₃F₆, contenant des groupes peroxy, à la condition que ledit produit de l'oxydation photochimique de C₂F₄ et/ou de C₃F₆ ne contienne pas de C₂F₄ et/ou C₃F₆ n'ayant pas réagi, lequel procédé comprend le traitement dudit produit d'oxydation photochimique à l'aide d'un rayonnement UV d'une longueur d'onde se situant à l'intérieur d'une plage allant de 200 à 500 nm, dans un courant d'oxygène, à une température se situant à l'intérieur d'une plage allant de -40 à 0°C.

4. Procédé de préparation de perfluoropolyéthers ayant un ou deux groupes terminaux hypofluorite, à partir du produit de l'oxydation photochimique de C₂F₄ et/ou de C₃F₆, contenant des groupes peroxy, lequel procédé comprend les étapes suivantes :
(a) le traitement dudit produit d'oxydation photochimique par un rayonnement UV d'une longueur d'onde se situant à l'intérieur d'une plage allant de 200 à 500 nm, dans un courant d'oxygène, à une température se situant à l'intérieur d'une plage allant de -40°C à 0°C;
(b) la réaction du produit obtenu à l'étape (a), dans la phase liquide, avec du fluor, à une température se situant à l'intérieur d'une plage allant de -60°C à +30°C, en présence de rayonnement UV d'une longueur d'onde se situant à l'intérieur d'une plage allant de 200 à 500 nm.

5. Procédé selon la revendication 4, dans lequel la longueur d'onde à l'étape (b) se situe à l'intérieur d'une plage allant de 300 à 500 nm.

6. Procédé selon la revendication 3 ou 4, dans lequel le groupe peroxy du produit obtenu à partir de l'oxydation photochimique de C₂F₄ et de C₃F₆ est substantiellement -OCF₂OOCF₂O-.

7. Procédé de préparation de perfluoropolyéthers peroxydés ayant substantiellement, comme groupe peroxy, un groupe -OCF₂OOCF₂O-, lequel procédé comprend le traitement du produit de l'oxydation photochimique de C₂F₄ et/ou de C₃F₆ dans un courant d'oxygène, à une température se situant à l'intérieur d'une plage allant de -70°C à -40°C, à l'aide de rayonnement UV d'une longueur d'onde allant de 200 à 500 nm, à la condition que ledit produit de l'oxydation photochimique de C₂F₄ et/ou de C₃F₆ ne contienne pas de C₂F₄ et/ou C₃F₆ n'ayant pas réagi.

8. Procédé de préparation de mono- ou bishypofluorites, qui comprend la réaction d'un perfluoropolyéther contenant un groupe peroxy -OCF₂OOCF₂O-, avec du fluor, dans la phase liquide, à une température se situant à l'intérieur d'une plage allant de -60°C à +30°C, en présence d'un rayonnement UV d'une longueur d'onde se situant à l'intérieur d'une plage allant de 200 à 500 nm.

9. Perfluoropolyéthers ayant des groupes terminaux hypofluorite, des formules :
FOCF₂(OCF₂CF₂)ₜ(OCF₂)ₚOCF₂OF
et
CF₃(OCF₂CF₂)ₜ(OCF₂)ₚOCF₂OF,
dans lesquels t et p sont tels que définis ci-dessus.
